# EUROPEAN PATENT APPLICATION

(11) **EP 4 556 496 A1**
(43) Date of publication of application: **21.05.2025**
(21) Application number: 24216928.2
(22) Date of filing: 02.12.2024
(51) Int. Cl.: C08F 14/00, C08F 14/22

(54) **METHOD FOR MANUFACTURING FLUOROELASTOMERS**

(71) Applicant: SOLVAY SPECIALTY POLYMERS ITALY S.p.A., 20021 Bollate (MI) (IT); Politecnico di Milano, 20133 Milano (IT)
(72) Inventor: FANTONI, Matteo, 20021 Bollate (MI) (IT); BERTANI, Daniela, 20021 Bollate (MI) (IT); FOIS, Luca, 20133 Milano (MI) (IT); SPONCHIONI, Mattia, 20133 Milano (MI) (IT); STORTI, Giuseppe, 20133 Milano (MI) (IT)
(74) Representative: Briatore, Andrea

(57) **Abstract**

The present invention relates to a method for manufacturing fluoroelastomers having iodinated/brominated chain ends, in emulsion polymerization whereas no addition of fluorosurfactants or hydrogenated surfactants is required. The resulting elastomer provides for cured articles having improved c-set and low polydispersity.

## Description

### Technical Field

The present invention relates to an improved method for manufacturing curable (per)fluoroelastomers having iodinated/brominated chain ends, in emulsion polymerization without the addition of fluorosurfactants and preferably without the addition of any surfactant.

### Background Art

Cured (per)fluoroelastomers have been used in a variety of applications, in particular for manufacturing sealing articles such as oil seals, gaskets, shaft seals and O-rings, because of several desirable properties such as heat resistance, chemical resistance, weatherability, etc.

A frequently used method for manufacturing curable (per)fluoroelastomers, in particular (per)fluoroelastomers having iodine or bromine atoms at polymer chain ends, involves aqueous emulsion polymerization of fluorinated monomers under chain transfer control via the use of iodinated or brominated (fluoro)(hydro)carbon compounds; such polymerization is generally carried out in the presence of fluorinated surfactants, which are commonly used in order to improve latex stability, increasing kinetics, and avoiding build-up or fouling of the reactors.

For example, US 2007/0100062 (DuPont Performance Elastomers L.L.C.) discloses fluoroelastomers having bromine and/or iodine cure sites prepared by emulsion polymerization. While it is broadly discloses that surfactants are optional ingredients, all the examples requires the use of a fluorinated surfactant (eg., perfluoro hexyl ethyl sulfonic acid). More recently, because of increasing issues related the use of fluorinated surfactants, reactions requiring non fluorinated surfactants have been disclosed in the art, for example in US 2018/0237628 and US 2018/0148527 (both in the name of Asahi Glass Company, Limited**).**

Now, efforts are presently devoted to phase out fluorinated surfactants and methods are being developed to manufacture (per)fluoropolymer products by aqueous polymerization procedures where no addition of fluorinated surfactants is required and possibly wherein the process is entirely performed in the absence of any surfactants (including non fluorinated surfactants herein referred to as "hydrogenated surfactants" or "hydrocarbon surfactants").

Stabilizing latexes with no use of fluorosurfactants is difficult and attempts have been made in this direction by playing with end groups chemistry, i.e. adapting conditions so as to generate polar end groups which can positively affect the latex stability.

When targeting manufacture of Br/I-containing curable fluoroelastomers in the absence of added surfactants, it is a challenging task to manage the delicate balance between the need of having as many as possible reactive chain ends (iodine or bromine chain ends, so as to have good crosslinking ability and good sealing performances of the resulting cured (per)fluoroelastomer), while ensuring latex stability during and after polymerization (which is instead mostly an effect of polar groups as chain ends).

At the same time, in order to optimize processability and molding ability of the curable (per)fluoroelastomer it is desirable to control its Polydispersity i.e. the breadth of distribution in molecular weights because a too high polydispersity results in poor molding properties, but also a too low polydispersity may result in poor processability because the presence of fractions of (per)fluoroelastomer chains having slightly lower molecular has an impact in reducing the viscosity of the melt.

In general it has been noticed that, when operating in the absence of fluorinated surfactants the colloidal stability is reduced and the kinetic of polymerization is slower due to a less efficient nucleation. In order to counterbalance these effects a higher amount of initiator is typically used, however this has an effect on the polymer structure. As a result, a larger number of chain ends will be ionic polar groups generated by the initiator while a lower number of iodine/bromine chain ends will be present thus reducing the number of curing sites and thus the performance of the polymer after curing (so that the resulting fluoroelastomer may have a higher c-set). Achieving a right balance of initiator, iodinated chain transfer agent, and time/speed of addition of these components to the reactor is crucial to obtain (per)fluoroelastomers having a good polymerization kinetic and good curing properties at the same time.

Now, surprisingly, the Applicant found that the problem of providing I/Br terminated (per)fluoroelastomers possessing outstanding crosslinking ability, and sealing performances, while delivering acceptable polymerization kinetics with no fouling/build-up and with good latex stability, can be solved by conducting an emulsion polymerization process in the absence of fluorinated surfactants comprising the reaction of fluorinated monomers in the presence of a I/Br chain transfer agent and a radical initiator to the condition of introducing said I/Br chain transfer agent in the reaction environment in 10 or more subsequent steps spaced along the time of the polymerization reaction (from the start of the polymerization reaction until its end).

### Summary of invention

The present invention relates to a method of making a (per)fluoroelastomer comprising Iodine and/or Bromine chain ends, said method comprising polymerizing a first (per)fluorinated monomer selected from vinylidene fluoride (VDF), or tetrafluoroethylene (TFE), in the presence of
- one or more further (per)fluorinated monomers (MF) different from said first (per)fluorinated monomer
- in an aqueous environment
- in the presence of one or more chain transfer agent having I and/or Br atoms (CTA) and
- one or more radical initiator,
wherein:
said one or more chain transfer agent is introduced in said aqueous reaction medium during the polymerization reaction in 10 or more subsequent steps, and
wherein said emulsion polymerization is carried out without addition of any fluorinated surfactant.

The Applicant surprisingly found that the method according to the present invention allows to directly manufacture with reasonable kinetics I/Br-containing (per)fluoroelastomers in the form of a latex. Such (per)fluoroelastomers when extracted from the latex (via conventional techniques e.g. via coagulation) e.g. possess excellent curing behavior and outstanding sealing properties. The method also provides for high colloidal stability in the aqueous phase, so that no significant build-up or fouling in the reactor occurs, nor any unwanted coagulation phenomena.

Advantageously, the (per)fluoroelastomers of the present invention have a limited amount of polar end groups of formula -CH₂OH, a limited amount of hydrogenated chain ends (such as those of formula -CF₂H, -CF₂CH₃, -CH₂CH₃ and -C(CH₃)₃), while possessing a high fraction of halogenated chain ends.

### Description of embodiments

For the purposes of the present description and of the following claims:
- the use of parentheses around symbols or numbers identifying the formulae, for example in expressions like "fluoroelastomer (A)", etc., has the mere purpose of better distinguishing the symbol or number from the rest of the text and, hence, said parenthesis can also be omitted;
- the expression "essentially consists of", when used in combination with repeat units of fluoroelastomer (A), is intended to indicate that minor amounts of end chains, defects, irregularities and monomer rearrangements are tolerated in fluoroelastomer (A), provided that their amount is below 5 moles% based on the total moles of the fluoroelastomer (A), more preferably below 2 moles%, even more preferably below 1 moles%;
- the terms "1,1-difluoroethylene", "1,1-difluoroethene" and "vinylidene fluoride" are used as synonyms, and referred to with the acronym "VDF";
- the term "fluoroelastomer" is intended to indicate essentially amorphous polymer(s), preferably having a low degree of crystallinity (having a heat of fusion of less than 5 J/g, preferably of less than 3 J/g, more preferably of less than 1 J/g, as measured by ASTM D-3418) and a glass transition temperature (Tg) below room temperature, as measured by ASTM D-3418. The fluoroelastomer has advantageously a Tg below 10°C, preferably below 5°C, more preferably below 0°C;
- the expression "fluorinated surfactant" is intended to indicate partially and fully fluorinated surfactants.

Non limitative examples of suitable further fluorinated monomers (M_{F}) are notably:
(i) C₂-C₈ perfluoroolefins, such as hexafluoropropylene (HFP) and , if said first (per)fluorinated monomer is not TFE, TFE;
(ii) hydrogen-containing C₂-C₈ olefins such as vinyl fluoride (VF), trifluoroethylene (TrFE), perfluoroalkyl ethylenes of formula CH₂=CH-Rf, wherein Rf is a C₁-C₆ perfluoroalkyl group and, if said first (per)fluorinated monomer is not VDF, VDF;
(iii) C₂-C₈ chloro and/or bromo and/or iodo-fluoroolefins such as chlorotrifluoroethylene (CTFE);
(iv) (per)fluoroalkylvinylethers (PAVE) of formula CF₂=CFOR_{f}, wherein Rf is a C₁-C₆ (per)fluoroalkyl group, e.g. -CF₃, -C₂F₅, -C₃F₇;
(v) (per)fluoro-oxy-alkylvinylethers of formula CF₂=CFOX, wherein X is a C₁-C₁₂ [(per)fluoro]-oxyalkyl comprising catenary oxygen atoms, e.g. the perfluoro-2-propoxypropyl group;
(vi) (per)fluorodioxoles having formula : 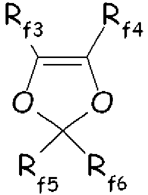 wherein Rf₃, Rf₄, Rf₅, Rf₆, equal or different from each other, are independently selected among fluorine atoms and C₁-C₆ (per)fluoroalkyl groups, optionally comprising one or more than one oxygen atom, such as notably -CF₃, -C₂F₅, -C₃F₇, -OCF₃, -OCF₂CF₂OCF₃; preferably, perfluorodioxoles;
(vii) (per)fluoro-methoxy-vinylethers (MOVE, hereinafter) having formula:

   CFX₂=CX₂OCF₂OR"_{f}

   wherein R"f is selected among linear or branched C₁-C₆ (per)fluoroalkyls; C₅-C₆ cyclic (per)fluoroalkyls; and C₂-C₆ (per)fluorooxyalkyls, linear or branched, comprising from 1 to 3 catenary oxygen atoms, and X₂ = F, H; preferably X₂ is F and R"f is -CF₂CF₃ (MOVE1); -CF₂CF₂OCF₃ (MOVE2); or -CF₃ (MOVE3).

Optionally the method of the invention can be performed in the presence of further hydrogenated (i.e. "non fluorinated" monomers).

Examples of hydrogenated monomers are notably non-fluorinated alpha-olefins, including ethylene, propylene, 1-butene, diene monomers, styrene monomers, alpha-olefins being typically used. C₂-C₈ non-fluorinated alpha-olefins (Ol), and more particularly ethylene (E) and propylene (F), will be selected for achieving increased resistance to bases.

In the case said first fluorinated monomer is VDF it is generally preferred that said one or more further (per)fluorinated monomer M_{F} comprises HFP.

In this case, HFP is least 10% moles, preferably at least 12% moles, more preferably at least 15% moles and at most 45% moles, preferably at most 40% moles, more preferably at most 35% moles with respect to all recurring units of the (per)fluoroelastomer of the invention.

In the case said first fluorinated monomer is TFE it is generally preferred that said one or more further (per)fluorinated monomer M_{F} comprises one or more perfluoroalkylvinylethers (PAVE).

In addition to the ingredients mentioned above the method of the invention may be preferably performed in the presence one or more bis-olefin monomer having general formula: 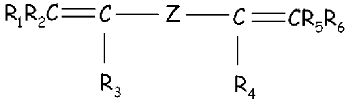 wherein R₁, R₂, R₃, R₄, R₅ and R₆, equal or different from each other, are H, a halogen, or a C₁-C₅ optionally halogenated group, possibly comprising one or more oxygen group; Z is a linear or branched C₁-C₁₈ optionally halogenated alkylene or cycloalkylene radical, optionally containing oxygen atoms, or a (per)fluoropolyoxyalkylene radical;
- recurring units derived from at least one (per)fluorinated monomer different from VDF and HFP; and
- recurring units derived from at least one hydrogenated monomer.

The bis-olefin (OF) is preferably selected from the group consisting of those complying with formulae (OF-1), (OF-2) and (OF-3) :
(OF-1) 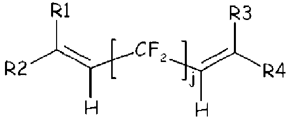 wherein j is an integer between 2 and 10, preferably between 4 and 8, and R₁, R₂, R₃, R₄, equal or different from each other, are H, F or C₁₋₅ alkyl or (per)fluoroalkyl group; a preferred bis-olefin of (OF-1) type is H₂C=CH-(CF₂)₆-CH=CH₂.
(OF-2) 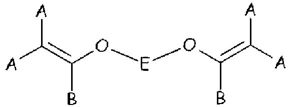 wherein
   each of A, equal or different from each other and at each occurrence, is independently selected from F, Cl, and H;
   each of B, equal or different from each other and at each occurrence, is independently selected from F, Cl, H and OR_{B}, wherein R_{B} is a branched or straight alkyl chain, which can be partially, substantially or completely fluorinated or chlorinated;
   E is a divalent group having 2 to 10 carbon atom, optionally fluorinated, which may be inserted with ether linkages; preferably E is a -(CF₂)ₘ- group, with m being an integer from 3 to 5;
   a preferred bis-olefin of (OF-2) type is F₂C=CF-O-(CF₂)₅-O-CF=CF₂.
(OF-3) 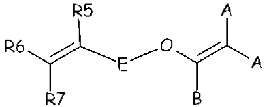 wherein E, A and B have the same meaning as above defined; R₅, R₆, R₇, equal or different from each other, are H, F or C₁₋₅ alkyl or (per)fluoroalkyl group.

When a bis-olefin is employed, the resulting fluoroelastomer typically comprises from 0.01% to 5% by moles of units deriving from the bis-olefin with respect to the total amount of units of said fluoroelastomer.

Optionally, the method of the invention may be performed in the presence of cure site containing monomers, so to introduce cure-site containing recurring units in the (per)fluoroelastomer of the invention.

Among cure-site containing monomers, mention can be notably made of: (CSM-1) iodine or bromine containing monomers of formula: 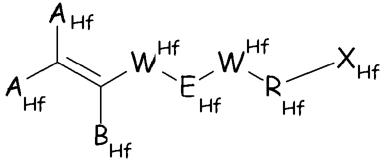
wherein each of A_{Hf}, equal to or different from each other and at each occurrence, is independently selected from F, Cl, and H; B_{Hf} is any of F, Cl, H and OR^{Hf}_{B}, wherein R^{Hf}_{B} is a branched or straight chain alkyl radical which can be partially, substantially or completely fluorinated or chlorinated; each of W^{Hf} equal to or different from each other and at each occurrence, is independently a covalent bond or an oxygen atom; E_{Hf} is a divalent group having 2 to 10 carbon atom, optionally fluorinated; R_{Hf} is a branched or straight chain alkyl radical, which can be partially, substantially or completely fluorinated; and R_{Hf} is a halogen atom selected from the group consisting of Iodine and Bromine; which may be inserted with ether linkages; preferably E is a -(CF₂)ₘ- group, with m being an integer from 3 to 5;
(CSM-2) ethylenically unsaturated compounds comprising cyanide groups, possibly fluorinated.

Among cure-site containing monomers of type (CSM1), preferred monomers are those selected from the group consisting of: (CSM1-A) iodine-containing perfluorovinylethers of formula: 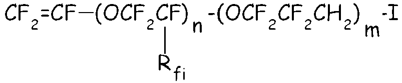
with m being an integer from 0 to 5 and n being an integer from 0 to 3, with the provision that at least one of m and n is different from 0, and Rfi being F or CF3; (as notably described in patents US 4745165 (AUSIMONT S.P.A.) , US 4564662 (3M) and EP 199138 A (DAIKIN IND., LTD.) ;and
(CSM-1B) iodine-containing ethylenically unsaturated compounds of formula:

   CX¹X²=CX³-(CF₂CF₂)ₚ-I

   wherein each of X1, X² and X³, equal to or different from each other, are independently H or F; and p is an integer from 1 to 5; among these compounds, mention can be made of CH₂=CHCF₂CF₂I, I(CF₂CF₂)₂CH=CH₂, ICF₂CF₂CF=CH₂, I(CF₂CF₂)₂CF=CH₂;
(CSM-1C) iodine-containing ethylenically unsaturated compounds of formula:

   CHR=CH-Z-CH₂CHR-I
wherein R is H or CH₃, Z is a C₁-C₁₈ (per)fluoroalkylene radical, linear or branched, optionally containing one or more ether oxygen atoms, or a (per)fluoropolyoxyalkylene radical; among these compounds, mention can be made of CH₂=CH-(CF₂)₄CH₂CH₂I, CH₂=CH-(CF₂)₆CH₂CH₂I, CH₂=CH-(CF₂)₈CH₂CH₂I, CH₂=CH-(CF₂)₂CH₂CH₂I;
(CSM-1D) bromo and/or iodo alpha-olefins containing from 2 to 10 carbon atoms such as bromotrifluoroethylene or bromotetrafluorobutene described, for example, in US 4035565 (DU PONT) or other compounds bromo and/or iodo alpha-olefins disclosed in US 4694045 (DU PONT).

Among cure-site containing monomers of type (CSM2), preferred monomers are those selected from the group consisting of:
(CSM2-A) perfluorovinyl ethers containing cyanide groups of formula CF₂=CF-(OCF₂CFX^{CN})ₘ-O-(CF₂)ₙ-CN, with X^{CN} being F or CF₃, m being 0, 1, 2, 3 or 4; n being an integer from 1 to 12;
(CSM2-B) perfluorovinyl ethers containing cyanide groups of formula CF₂=CF-(OCF₂CFX^{CN})_{m'}-O-CF₂-CF(CF₃)-CN, with X^{CN} being F or CF₃, m' being 0, 1, 2, 3 or 4.

Specific examples of cure-site containing monomers of type CSM2-A and CSM2-B suitable to the purposes of the present invention are notably those described in patents US 4281092 (DU PONT), US 5447993 (DU PONT) and US 5789489 (DU PONT).

It is nonetheless generally preferred for the fluoroelastomer (A) not to comprise recurring units derived from cure site-containing monomers.

Preferred (per)fluoroelastomers to be manufactured with the method of the invention are those having following compositions (in mol. %):
(i) vinylidene fluoride (VDF) 35-85%, hexafluoropropene (HFP) 10-45%, tetrafluoroethylene (TFE) 0-30%, perfluoroalkyl vinyl ethers (PAVE) 0-15%, bis-olefin (OF) 0-5%;
(ii) vinylidene fluoride (VDF) 50-80%, perfluoroalkyl vinyl ethers (PAVE) 5-50%, tetrafluoroethylene (TFE) 0-20%, bis-olefin (OF) 0-5%;
(iii) vinylidene fluoride (VDF) 20-30%, C₂-C₈ non-fluorinated olefins (Ol) (in particular E or P) 10-30%, hexafluoropropene (HFP) and/or perfluoroalkyl vinyl ethers (PAVE) 18-27%, tetrafluoroethylene (TFE) 10-30%, bis-olefin (OF) 0-5%; tetrafluoroethylene (TFE) 50-80%, perfluoroalkyl vinyl ethers (PAVE) 20-50%, bis-olefin (OF) 0-5%;
(iv) tetrafluoroethylene (TFE) 45-65%, C₂-C₈ non-fluorinated olefins (Ol) 20-55%, vinylidene fluoride 0-30%, bis-olefin (OF) 0-5%;
(v) tetrafluoroethylene (TFE) 32-60% mol %, C₂-C₈ non-fluorinated olefins (Ol) 10-40%, perfluoroalkyl vinyl ethers (PAVE) 20-40%, fluorovinyl ethers (MOVE) 0-30%, bis-olefin (OF) 0-5 %;
(vi) tetrafluoroethylene (TFE) 33-75%, perfluoroalkyl vinyl ethers (PAVE) 15-45%, vinylidene fluoride (VDF) 5-30%, hexafluoropropene HFP 0-30%, bis-olefin (OF) 0-5%;
(vii) vinylidene fluoride (VDF) 35-85%, fluorovinyl ethers (MOVE) 5-40%, per-fluoroalkyl vinyl ethers (PAVE) 0-30%, tetrafluoroethylene (TFE) 0-40%, hexa-fluoropropene (HFP) 0-30%, bis-olefin (OF) 0-5%;
(viii) tetrafluoroethylene (TFE) 20-70%, fluorovinyl ethers (MOVE) 30-80%, per-fluoroalkyl vinyl ethers (PAVE) 0-50%, bis-olefin (OF) 0-5%.

Indeed, as mentioned above, the (per)fluoroelastomer of the invention has iodine and/or bromine chain ends, which hence already provide for effective cure site for crosslinking.

As known, I and/or Br atoms are comprised in the (per)fluoroelastomer as terminal groups of the polymer chain. These terminal groups are obtained by addition to the polymerization medium of one or more chain transfer agent (CTA) having I and/or Br atoms. Said CTA is preferably selected from the group consisting of:
- iodinated and/or brominated organic chain-transfer agent(s); suitable organic chain-transfer agents are typically those of formula:

   R_{f}(I)ₓ(Br)_{y},

   in which R_{f} is a (per)fluoroalkyl or a (per)fluorochloroalkyl containing from 1 to 8 carbon atoms, while x and y are integers between 0 and 2, with 1 ≤ x+y ≤ 2 (see, for example, US 4243770 from DAIKIN IND., LTD. and US 4943622 from NIPPON MEKTRON KK.); and
- alkali metal or alkaline-earth metal iodides and/or bromides, such as described in US 5173553 (AUSIMONT SRL.).

Preferred CTAs are iodinated and/or brominated organic chain-transfer agent(s), more preferably those of formula

R_{f}(I)ₓ(Br)_{y},

as described above., and, even more preferably those of formula R'_{f}(I)_{x'}(Br)_{y'}, in which R'f is a perfluoroalkyl containing from 1 to 8 carbon atoms, while x' and y' are integers between 0 and 2, with 1 ≤ x'+y' ≤ 2.

In al embodiments most preferred CTA are those comprising I atoms and free from Br atoms, in particular those of formula

R_{f}(I)₂ or R'_{f}(I)₂

with R_{f} and R'_{f} being as above detailed.

As mentioned above, in the method of the present invention the one or more CTA is added, during the reaction of polymerization in 10 or more, preferably 12 or more, more preferably 15 or more subsequent steps. Preferably a first amount of CTA is already present in the reaction medium when the polymerization is initiated (i.e. typically when monomers and radical initiator are put in contact) but is also possible to perform the method of the invention adding a first amount of CTA only after the polymerization is initiated.

After an initial amount of CTA in introduced in the reaction medium, the remaining amount of CTA can be added to the reaction medium in subsequent steps during the course of the polymerization reaction. It is not essential that all in all the steps the CTA is added in equal amounts however it is preferred that the CTA is added gradually from the beginning to the end of the polymerization reaction. It is also possible to add the CTA to the reaction medium continuously during the polymerization reaction. For the purposes of the present invention a continuous feeding of the CTA is considered practically equivalent to an addition of the CTA in infinite steps and therefore encompassed by the present invention.

The conventional way of manufacturing iodine terminated (per)fluoroelastomers provides for the addition of the entire amount of the chain transfer agents at the beginning of the reaction (e.g. see WO2010/092021) or in a small number (2-3) of portions (e.g. 3 portions in WO2022/128190 from Solvay Specialty Polymers). As shown in the experimental section of this application, the addition of the CTA in 10 steps or more allows to obtain a (per)fluoroelastomer which, when cured, has an improved C-SET performance with respect to a similar (per)fluoroelastomer which is manufactured in the same way but where the CTA is added all at the beginning of the reaction or in 3 portions as it is described in the art.

Looking at the polydispersity, a lower polydispersity in in general desirable when the (per)fluoroelastomer is used in molding processes, particularly injection molding. A higher polydispersity may render the polymer harder to process when molding.

it is known that the molecular weight distribution can be regulated by the choice and the dosing of the chain transfer agent. In particular, when an iodinated/brominated CTA is used in the radical polymerization of fluoromonomers, its addition at the start of the polymerization process generally leads to a low polydispersity.

It is also known that the addition of an iodine/bromine based CTA in steps during the polymerization reaction causes the polydispersity to significantly increase. Surprisingly the inventors have found that (as reflected in the data shown in the experimental section), while this effect is very pronounced if the number of addition steps for the CTA is small (e.g. 3), instead increasing the amount of steps to 10 or above, as in the method if the invention, the polydispersity of the resulting polymers is significantly reduced almost to the same value obtained when all the CTA is added at the beginning of the polymerization. This is a totally unexpected effect and leads to a (per)fluoroelastomer which not only has an improved C-SET performance after curing but also an optimal polydispersity for injection molding.

It is well known that, in order to obtain a (per)fluoroelastomer exhibiting a good (low) C-SET value when cured, it is necessary to have a larger number of iodine or bromine chain ends. On the other hand when operating in the absence of surfactants and in particular of fluorinated surfactants, in order for the reaction to proceed efficiently it is necessary to compensate for the lack of an emulsifier by adding a larger initial amount of radical initiator. Once the polymerization is started, polymer chains with ionic chain ends are formed which can help forming and stabilizing the emulsion, but, on the other hand the formation of ionic chain ends should be carefully controlled in order to have a sufficient amount of iodine or bromine containing chain ends at the end of the polymerization.

The applicant surprisingly found that the addition of the chain transfer agent in 10 or more steps during the polymerization reaction allows to improve this aspect so that the polymerization reaction proceeds effectively in emulsion in the absence of fluorinated surfactants and even in the absence of any surfactant, while resulting in a polymer which has excellent curing performance as reflected by the improved C-SET value and at the same time has relatively low polydispersity.

As mentioned above the method of the invention provides for a radical initiator to initiate the polymerization reaction. The choice of the initiator is not particularly limited, any initiator commonly used for the polymerization of fluoromonomers can be used in the method of the invention.

Since the method of the invention is performed in the absence of fluorinated surfactants or even in the absence of any surfactant, as explained above, it is preferred that significant amount of radical initiator is present at the start of the polymerization, for example it is preferred that at least 20%w, preferably at least 30%w, even more preferably at least 40%w of the total initiator used during the polymerization is present in the reaction medium when the polymerization is first initiated. The remaining amount of radical initiator can be introduced gradually during the progress of the polymerization reaction.

Both organic and inorganic radical initiators can be used in the process of the present invention. Suitable inorganic radical initiators include, but are not limited to, persulfates such as sodium, potassium and ammonium persulfates and hydrogen peroxide.

Among organic initiators mention can be made of:
(a) azo-compounds, such as 2,2'-azobis(4-methoxy-2,4dimethylvaleronitrile), 2,2'-azobis (2,4-dimethyl-valeronitrile); tert-butylazo-2-cyanobutane, 2,2'-azobis(isobutyronitrile);
(b) diacylperoxides such as diacetylperoxide, disuccinyl peroxide, dipropionylperoxide, dibutyrylperoxide, dibenzoylperoxide, dilauroyl-peroxide; benzoylacetylperoxide, diglutaric acid peroxide;
(c) dialkylperoxides, including notably ditertbutylperoxide (DTBP), t-butyl cumyl peroxide; 2,5-dimethyl-2,5-di(t-butylperoxy)hexane; dicumyl peroxide; 1,1-di(t-butylperoxy)-3,3,5-trimethylcyclohexane; di-tertamyl peroxide;
(d) hydroperoxides, including notably t-butyl hydroperoxide (TBHP), cumene hydroperoxide, tertiaryamylhydroperoxide;
(e) per-acids esters and salts thereof such as e.g. ammonium, sodium or potassium salts. Examples of per-acids include peracetic acid. Esters of the peracid can be used as well and examples thereof include tert-butyl peroxybenzoate, tert-butylperoxyacetate and tert-butylperoxypivalate;
(f) peroxydicarbonates, including notably diisopropylperoxydicarbonate, tert-butyl-peroxyisopropylcarbonate; di-n-propylperoxydicarbonate, dicyclohexylperoxydicarbonate, di-n-butyl peroxydicarbonate, di-2-ethylhexylperoxydicarbonate, dimyristyl peroxydicarbonate, dicetyl peroxydicarbonate, diethylperoxydicarbonate.

When the initiator is chosen among organic Initiators these are preferably selected among those listed above under (b) to (f).

In the method of the invention, the total amount of initiator is of at least 1.50 and at most 15.00 mmol of O₂ per kg of (per)fluoroelastomer.

Such amount is expressed in terms of mmoles of -O-O- (peroxide, also indicated in this text as O₂) moieties in the said initiator and is representative of the amount of active oxygen atoms which contributes to the creation of radical species.

For any initiator which does not comprise any peroxide moiety, the mmoles of O₂ (peroxide) moieties in the said initiator can be equally determined based on the decomposition mechanism leading to the creation of radical species; an organic azo group is notably known to decompose with eliminating nitrogen and generating two radical species, and hence it is equivalent, in terms of radical species' creation, to O₂ (peroxide) moieties.

Preferably, initiator is used in the method of the invention in an amount of at most 15.00, more preferably at most 12.00, even more preferably at most 10.00 mmol of O₂ per kg of (per)fluoroelastomer; and/or in an amount of preferably at least 1.80, more preferably at least 2.00, even more preferably at least 2.50 mmol of O₂ per kg of (per)fluoroelastomer.

The ratio between the total amount of CTA expressed as mmoles of iodine + mmoles bromine contained in the CTA and the total amount of initiator expressed in mmoles of O₂ in the method of the invention is preferably of at least 2.00 and of at most 8.00. The Applicant has found that the careful control of this weight ratio is essential to ensure generation of radicals and chain ends in the targeted fluoroelastomer such as to provide for colloidal stability and outstanding reactivity in crosslinking, so that cured parts therefrom have outstanding sealing performances. More preferably this ratio is of at least 2.50, more preferably of at least 3.20, and even more preferably of at least 3.40 and of at most 7.60, preferably of at most 7.50, more preferably of at most 7.00.

In order to facilitate nucleation in the absence of surfactants, in particular of fluorinated surfactants, it is further preferred that the ratio between CTA and initiator expressed as defined above is lower at the first initiation of the polymerization reaction. For example at the first initiation of the polymerization reaction the CTA in the reaction medium may be in a ratio of 0 to 2, preferably of 0.5 to 2 with respect to the initiator. Even more preferably such ratio is maintained below 3 until 25% of total monomer conversion and more preferably above 3 and below 7 between 75% and 100% of total monomer conversion.

Exemplary embodiments of fluorinated surfactants which are not added in the method of the present invention are notably: ammonium perfluoro-octanoate; (per)fluoropolyoxy-alkylenes ended with one or more carboxylic groups, optionally salified with sodium, ammonium and alkaline metals, more preferably salified with sodium; and partially fluorinated alkylsulphonates.

Exemplary embodiments of hydrogenated surfactants which are preferably not added in the method of the present invention are notably: sodium lauryl sulfate, sodium dodecylbenzenesulfonate.

The method according to the present invention can be preferably performed in continuous, or semi-batch or batch.

The method of the present invention is performed at a temperature that can be selected from the person skilled in the art, notably on the basis of the initator. Preferably, the method of the present invention is performed at a temperature from 40°C to 120°C, more preferably from 50° C to 100°C.

The method of the present invention is preferably performed at a pressure between 10 and 60 bars, more preferably from 25 to 55 bars.

The method of the present invention leads to a polymer latex. As known to the skilled person the latex can be used as such or the polymer can be extracted form the latex typically with conventional coagulation techniques. In the experimental section below the properties of the polymer such as Mooney viscosity and Polydispersity have been measured on samples resulting from coagulation. Mechanical properties and c-set are measured on cured samples as indicated in the experimental section.

Should the disclosure of any patents, patent applications, and publications which are incorporated herein by reference conflict with the description of the present application to the extent that it may render a term unclear, the present description shall take precedence.

Should the disclosure of any patents, patent applications, and publications, which are incorporated herein by reference conflict with the description of the present application to the extent that it may render a term unclear, the present description shall take precedence.

The present invention will be now described in more detail with reference to the following examples, whose purpose is merely illustrative and not limitative of the scope of the invention.

### Experimental section

### Materials:

Thermax N990 - Carbon black from Cancarb
Drimix TAIC 75 (having a concentration of 75%w of Triallyl isocyanurate) from Finco
Luperox 101 XL 45 (2,5-dimethyl-2,5-di(tert-butylperoxy)-hexane with a 45%w concentration as powder on calcium carbonate and silica) from Arkema.
ZnO, C₄F₈I₂, ammonium persulfate, 1,6-divinylperfluorohexane from Sigma Aldrich.

### Mooney Viscosity:

Mooney viscosity (ML) (1+10) at 121°C was measured according to ASTM D1646.

### Polydispersity

The Polydispersity index (PDI) is understood to denote a measure of the distribution of molecular mass in a given polymeric material, and is calculated by dividing the weight average molecular weight (Mw) with the number average molecular weight (Mn).

The Molecular weights distribution in a polymer sample was measured with a Waters HPLC system equipped with a model 1515 Isocratic HPLC Pump, model 2414 RI Detector, model 2707 Autosampler, and four Agilent PL gel columns. THF was used as a carrier solvent at a flow rate of 1.0 mL/min at 35°C degrees centigrade The GPC system was calibrated using polystyrene standards (from 2000 to 4 million Dalton). PDI was calculated from the curve of molecular weights distribution.

### C-SET

The compression set (C-SET) has been determined on cured O-ring specimen standard AS568A (type 214). The o-rings were formed from a compound containing 100 parts by weight of (per)fluoroelastomer, 30 parts by weight of N990, 4 parts by weight of Drimix TAIC 75, 5 parts by weight of ZnO and 3 parts by weight of Luperox 101 XL 45.

The compound was molded and cured in a pressed mold comprising 12 o-ring shaped cavities at 160°C for 10 minutes and then post-treated in an air circulating oven at 230°C for 5 hours.

C-SET was measured on these o-rings according to the ASTM D 395-B, method B (compression) at 200°C for 70 hours as an average of 4 samples.

### Mechanical properties

Mechanical properties were determined on cured samples. The same compound used for forming the o-rings was compression molded in a 10x10cm plaque at 160C for 300 seconds, then post cured in an oven for 1+4 hours at 230°C (1 hour T ramp from room T to 230°C + 4 hours at 230°C). Specimen were punched off from said plaques following ASTM D412 standard method C at 23°C .

### Example 1

A 10 L vertical stainless steel reactor, equipped with an impeller, was charged with 5.6 Kg of demineralized water, and heated to 80 °C under stirring at 545 RPM. HFP was introduced in the reactor until the reactor pressure was increased by 10.7 bar.

Then, a mixture of 70.5% mol VDF, 18.5% mol HFP and 11.0% mol TFE was introduced to bring the reactor pressure up to 26.0 bar.
2.05g C₄F₈I₂ were charged, followed by
1.69g of ammonium persulfate (from a 22.5 g/l aqueous solution)

The mixture was allowed to react until the reactor pressure dropped below 26.0 bar (polymerization kick-off); at this time, the aforementioned VDF/HFP/TFE monomer mixture was continuously fed into the reactor so as to maintain the pressure at 26.0 bar.

After 125 g of monomer mixture was fed in the reactor, a total of 16.4 g of C₄F₈I₂ were introduced in 19 equal aliquots every 125 g of monomer mixture fed until the end of the polymerization.

A total of 7.4 g of 1,6-divinylperfluorohexane (bis-olefin) was introduced in 20 equal aliquots every 125 g of monomer mixture fed, starting from the polymerization kick-off, until the end of the polymerization.

After 1250 g of monomer mixture was fed in the reactor, a total of 1.69g of ammonium persulfate was added in 10 equal aliquots, one every 125 g of monomer mixture fed, until the end of polymerization.

When 2500 g of monomer mix were added, monomer feed to the reactor was closed, stirring was stopped and the reactor was allowed to cool down. Finally, the reactor was vented and the latex was discharged and further degassed by nitrogen purging.

The polymer, obtained by coagulation of the latex, had a Mooney viscosity of 15 MU.

### Example 2 (comparative)

The same process of Ex. 1 was followed except that the entire amount of C₄F₈I₂ was charged at the beginning of the polymerization. The polymer, obtained by coagulation of the latex, had a Mooney viscosity of 25 MU.

### Example 3 (comparative)

The same process of Ex 2 was followed except that the ammonium persulfate was all added at the beginning of the polymerization. The polymer, obtained by coagulation of the latex, had a Mooney viscosity of 24 MU.

### Example 4 (comparative)

The same process of Ex. 3 was followed except that the entire amount of C₄F₈I₂ was charged in three aliquots, one (20%w of the total amount) at the beginning of the polymerization, one (40%w of the total amount) after 500g of monomer mixture was charged and one (40%w of the total amount) after 2000g of monomer mixture was charged. The polymer, obtained by coagulation of the latex, had a Mooney viscosity of 36 MU.

Table 1 summarizes the results for C-SET, polydispersity and mechanical properties for cured parts obtained from fluoroelastomers made according to the Examples above.

**Table 1**

| | **Example 1 (invention)** | **Example 2 (comp)** | **Example 3 (comp)** | **Example 4 (comp)** |
|---|---|---|---|---|
| **C-SET** | 27 | 32 | 31 | 31 |
| **Polydispersity** | 3.4 | 3.1 | 2.9 | 4.2 |
| **Tensile strength (MPa)** | 22 | 22 | 21 | 22 |
| **50% Modulus (MPa)** | 2.3 | 1.9 | 2.2 | 2.1 |
| **100% Modulus (MPa)** | 5.6 | 4.0 | 4.7 | 4.6 |
| **Elongation at break (%)** | 274 | 227 | 293 | 227 |
| **Shore A Hardness** | 74 | 72 | 72 | 71 |

## Claims

1. A method of making a (per)fluoroelastomer comprising Iodine and/or Bromine chain ends, said method comprising polymerizing a first (per)fluorinated monomer selected from vinylidene fluoride (VDF), or tetrafluoroethylene (TFE), in the presence of
- one or more further (per)fluorinated monomers (M_{F}) different from said first (per)fluorinated monomer
- in an aqueous environment
- in the presence of one or more chain transfer agent having I and/or Br atoms (CTA) and
- one or more radical initiator,
wherein:
said one or more chain transfer agent is introduced in said aqueous reaction medium during the polymerization reaction in 10 or more subsequent steps, and
wherein said emulsion polymerization is carried out without addition of any fluorinated surfactant.

2. The method of Claim 1, wherein said one or more further (per)fluorinated monomers (M_{F}) are selected from the group consisting of:
(i) C₂-C₈ perfluoroolefins, such as hexafluoropropylene (HFP) and , if said first (per)fluorinated monomer is not TFE, TFE;
(ii) hydrogen-containing C₂-C₈ olefins such as vinyl fluoride (VF), trifluoroethylene (TrFE), perfluoroalkyl ethylenes of formula CH₂=CH-R_{f}, wherein Rf is a C₁-C₆ perfluoroalkyl group and, if said first (per)fluorinated monomer is not VDF, VDF;
(iii) C₂-C₈ chloro and/or bromo and/or iodo-fluoroolefins such as chlorotrifluoroethylene (CTFE);
(iv) (per)fluoroalkylvinylethers (PAVE) of formula CF₂=CFOR_{f}, wherein Rf is a C₁-C₆ (per)fluoroalkyl group, e.g. -CF₃, -C₂F₅, -C₃F₇;
(v) (per)fluoro-oxy-alkylvinylethers of formula CF₂=CFOX, wherein X is a C₁-C₁₂ [(per)fluoro]-oxyalkyl comprising catenary oxygen atoms, e.g. the perfluoro-2-propoxypropyl group;
(vi) (per)fluorodioxoles having formula : 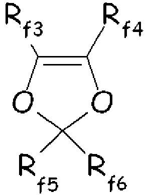 wherein R_{f3}, R_{f4}, R_{f5}, R_{f6}, equal or different from each other, are independently selected among fluorine atoms and C₁-C₆ (per)fluoroalkyl groups, optionally comprising one or more than one oxygen atom, such as notably -CF₃, -C₂F₅, - C₃F₇, -OCF₃, -OCF₂CF₂OCF₃; preferably, perfluorodioxoles;
(vii) (per)fluoro-methoxy-vinylethers (MOVE, hereinafter) having formula:
CFX₂=CX₂OCF₂OR"_{f}
wherein R"f is selected among linear or branched C₁-C₆ (per)fluoroalkyls; C₅-C₆ cyclic (per)fluoroalkyls; and C₂-C₆ (per)fluorooxyalkyls, linear or branched, comprising from 1 to 3 catenary oxygen atoms, and X₂ = F, H; preferably X₂ is F and R"f is -CF₂CF₃ (MOVE1); -CF₂CF₂OCF₃ (MOVE2); or -CF₃ (MOVE3);

3. The method of claims 1 or 2 wherein said chain transfer agent is selected from
(i) iodinated and/or brominated organic chain-transfer agent(s);
(ii) alkali metal or alkaline-earth metal iodides and/or bromides;

4. The method of claim 3 wherein said chain transfer agent is an organic iodinated and/or brominated organic chain transfer agent selected from (ii) those of formula Rf(I)ₓ(Br)_{y}, in which Rf is a (per)fluoroalkyl or a (per)fluorochloroalkyl containing from 1 to 8 carbon atoms, while x and y are integers between 0 and 2, with 1 ≤ x+y ≤ 2,

5. The method of any preceding claim wherein said chain transfer agent is a iodinated chain transfer agent.

6. The method of any preceding claim wherein the polymerization of said first monomer is polymerized also in the presence of one or more bis-olefin monomers (BOF) having general formula : 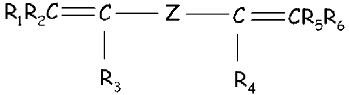 wherein R₁, R₂, R₃, R₄, R₅ and R₆, equal or different from each other, are H, a halogen, or a C₁-C₅ optionally halogenated group, possibly comprising one or more oxygen group; Z is a linear or branched C₁-C₁₈ optionally halogenated alkylene or cycloalkylene radical, optionally containing oxygen atoms, or a (per)fluoropolyoxyalkylene radical;

7. The method of claim 6 wherein said wherein said one or more bis-olefin monomer is selected from the group consisting of those complying with formulae (OF-1), (OF-2) and (OF-3) :
(OF-1) 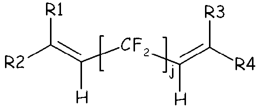 wherein j is an integer between 2 and 10, preferably between 4 and 8, and R1, R2, R3, R4, equal or different from each other, are H, F or C₁₋₅ alkyl or (per)fluoroalkyl group;
(OF-2) 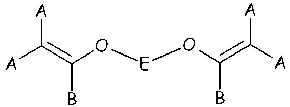 wherein each of A, equal or different from each other and at each occurrence, is independently selected from F, Cl, and H; each of B, equal or different from each other and at each occurrence, is independently selected from F, Cl, H and OR_{B}, wherein R_{B} is a branched or straight chain alkyl radical which can be partially, substantially or completely fluorinated or chlorinated; E is a divalent group having 2 to 10 carbon atom, optionally fluorinated, which may be inserted with ether linkages; preferably E is a -(CF₂)ₘ- group, with m being an integer from 3 to 5; a preferred bis-olefin of (OF-2) type is F₂C=CF-O-(CF₂)₅-O-CF=CF₂.
(OF-3) 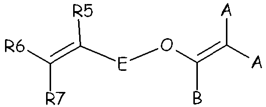 wherein E, A and B have the same meaning as above defined; R5, R6, R7, equal or different from each other, are H, F or C₁₋₅ alkyl or (per)fluoroalkyl group. The fluoroelastomer (A) of anyone of the preceding claims, wherein the amount of recurring units derived from bis-olefin (OL) is of at least 0.01% moles, preferably of at least 0.03 % moles and more preferably of at least 0.05 % moles, and of at most 5.0 % moles, preferably at most 0.5 % moles, more preferably at most 0.2 % moles, with respect to all other recurring units of the fluoroelastomer.

8. The method of any preceding claim which is performed in the absence of surfactants.

9. The method of any preceding claim wherein the total amount of said radical initiator, is in an amount of at most 15.00 and at least 1.50 millimoles of O₂ per kg of (per)fluoroelastomer formed.

10. The method of any preceding claim wherein the ratio between the total amount of CTA (expressed as mmoles of iodine + mmoles of bromine contained in the CTA) and the total amount of initiator (expressed in mmoles of O₂) is of at least 2.00 and of at most 8.00.

11. The method of any preceding claim wherein, at the first initiation of the polymerization reaction, the ratio between the amount of CTA (expressed as mmoles of iodine + mmoles of bromine contained in the CTA) and the amount of initiator (expressed in mmoles of O₂) present in the reaction medium is from 0 to 2, preferably from 0.5 to 2.

12. The method of any preceding claim wherein, at all moments from 0 to 25% monomer conversion, the ratio between the amount of CTA (expressed as mmoles of iodine + mmoles of bromine contained in the CTA) and the amount of initiator (expressed in mmoles of O₂) present in the reaction medium is from 0 to 3.

13. The method of any preceding claim wherein, at all moments from 75 to 100% monomer conversion, the ratio between the amount of CTA (expressed as mmoles of iodine + mmoles of bromine contained in the CTA) and the amount of initiator (expressed in mmoles of O₂) present in the reaction medium is from 3 to 7.
